# EUROPÄISCHE PATENTSCHRIFT

(11) **EP 3 347 313 B1**
(45) Veröffentlichungstag und Bekanntmachung des Hinweises auf die Patenterteilung: **03.04.2019**
(21) Anmeldenummer: 16757244.5
(22) Anmeldetag: 26.08.2016
(51) Int. Cl.: C03B 23/035, C03B 23/025

(54) **ÜBERDRUCKUNTERSTÜTZTES SCHWERKRAFTBIEGEVERFAHREN UND HIERFÜR GEEIGNETE VORRICHTUNG**
POSITIVE PRESSURE ASSISTED GRAVITY BENDING METHOD AND DEVICE SUITED FOR CARRYING OUT THIS METHOD
PROCEDE DE CINTRAGE PAR GRAVITE ASSISTE PAR SURPRESSION ET DISPOSITIF ADAPTE

(30) Priorität: 08.09.2015 EP 15184166
(43) Veröffentlichungstag der Anmeldung: 18.07.2018
(73) Patentinhaber: Saint-Gobain Glass France, 92400 Courbevoie (FR)
(72) Erfinder: LE NY, Jean-Marie, 4851 Gemmenich (BE); BALDUIN, Michael, 52477 Alsdorf (DE); SCHALL, Günther, 52372 Kreuzau (DE)
(74) Vertreter: Feist, Florian Arno
(86) Internationale Anmeldenummer: PCT/EP2016/070140
(87) Internationale Veröffentlichungsnummer: WO 2017/042037

(56) Entgegenhaltungen:
- EP-A2- 0 262 046
- EP-B1- 1 611 064
- WO-A1-2014/166793
- US-A- 5 328 496
- US-A- 5 669 952
- US-A1- 2013 340 479

## Beschreibung

Die Erfindung betrifft ein überdruckunterstütztes Schwerkraftbiegeverfahren für Glasscheiben, eine hierfür geeignete Vorrichtung sowie die Verwendung eines oberen Formgebungswerkzeugs zur Erzeugung eines Überdrucks in einem Schwerkraftbiegeverfahren.

Verglasungen für Kraftfahrzeuge weisen typischerweise eine Biegung auf. Eine verbreitetes Verfahren zum Biegen von Glasscheiben ist das sogenannte Schwerkraftbiegen (auch *gravity bending* oder *sag bending*). Dabei wird die im Ausgangszustand plane Glasscheibe auf der Auflagefläche einer Biegeform angeordnet. Die Scheibe wird dann auf mindestens ihre Erweichungstemperatur erwärmt, so dass sie sich unter dem Einfluss der Schwerkraft an die Auflagefläche anlegt. Durch die Ausgestaltung der Auflagefläche kann so die Form der Glasscheibe beeinflusst werden. Durch das Schwerkraftbiegen kann die endgültige Biegung erreicht werden. Ein solches Verfahren ist beispielsweise aus GB 813069 A bekannt. Bei komplexeren Scheibenformen kommen jedoch häufig mehrstufige Biegeverfahren zum Einsatz. Typischerweise wird in einem ersten Biegeschritt mittels Schwerkraftbiegen eine Vorbiegung erzeugt, während die endgültige Form in einem zweiten Biegeschrift - häufig mittels Pressbiegen zwischen zwei komplementären Biegeformen - erzeugt wird. Solche mehrstufige Biegeverfahren sind beispielsweise aus EP 1 836 136 B1, US 2004107729 A1, EP 0531152 A2 und EP 1371616 A1 bekannt.

Zu den Nachteilen klassischer Schwerkraftbiegeverfahren zählen hohe Biegetemperaturen um die Glasscheiben wirksam zu erweichen, und lange Biegezeiten, bis die Scheiben ihre gewünschte Form eingenommen haben. Beides führt zu erhöhten Produktionskosten.

Die EP 0 706 978 A2 offenbart ein Schwerkraftbiegeverfahren, welches durch Überdruck unterstützt wird. Dabei wird die zu biegende Scheibe zwischen der unteren Schwerkraftbiegeform und einem oberen Formgebungswerkzeug angeordnet. Durch das obere Formgebungswerkzeug wird ein Überdruck auf der oberen Glasoberfläche erzeugt, wodurch die Formung der Scheibe in der Schwerkraftbiegeform beschleunigt wird. Das obere Formgebungswerkzeug kann eine vollflächige oder eine rahmenartige periphere Kontaktfläche aufweisen. Das Formgebungswerkzeug kann direkt mit der Glasscheibe in Kontakt gebracht werden ("hard seal") oder leicht oberhalb der Glasscheibe positioniert werden ("soft seal").

Die WO 2014/166793 A1 offenbart die Verwendung von Metallgeweben und -filzen beim Glasbiegen. Die Biegewerkzeuge werden dabei mit dem Gewebe oder Filz überzogen als hitzebeständiges Trennmaterial.

Die US 5 328 496 A offenbart ebenfalls ein metallhaltiges, insbesondere edelstahlhaltiges Gewebe als Überzug für ein Werkzeug in einem Biege- und -vorspannprozess für Glasscheiben.

Die US 2013/0340479 A1 offenbart ein Werkzeug zum Anheben und Biegen von Glasscheiben, dessen rahmenartige Kontaktfläche mit feuerfesten Fasern aus Glas, Metall oder Keramik gepolstert ist.

Der vorliegenden Erfindung liegt die Aufgabe zugrunde, ein weiter verbessertes Schwerkraftbiegeverfahren und eine dafür geeignete Vorrichtung bereitzustellen. Insbesondere soll ein Überdruck zur Unterstützung des Schwerkraftbiegens mit höherer Effizienz erzeugt werden.

Die Aufgabe der Erfindung wird erfindungsgemäß durch eine Vorrichtung zum Biegen von mindestens einer Glasscheibe gelöst, mindestens umfassend
- eine Schwerkraftbiegeform mit einer Auflagefläche, die dazu geeignet ist, mindestens eine Glasscheibe darauf anzuordnen,
- ein oberes Formgebungswerkzeug gegenüberliegend der Auflagefläche angeordnet, das dazu geeignet ist, einen Überdruck auf der von der Auflagefläche abgewandten Oberfläche der auf der Auflagefläche angeordneten mindestens einen Glasscheibe zu erzeugen,
wobei das Formgebungswerkzeug eine Abdeckung aufweist, welche einen in Richtung der Schwerkraftbiegeform geöffneten Hohlraum ausbildet, und mit einer auf einem Randabschnitt der Abdeckung angeordneten Dichtlippe ausgestattet ist zur Kontaktierung mit der von der Auflagefläche abgewandten Oberfläche der mindestens einen Glasscheibe, und wobei das Formgebungswerkzeug mit Mitteln ausgestattet ist, ein Gas in den Hohlraum einzuleiten, um den Überdruck zu erzeugen.

Die Aufgabe der Erfindung wird außerdem gelöst durch ein Verfahren zum Biegen mindestens einer Glasscheibe, mindestens umfassend die folgenden Verfahrensschritte:
(a) Anordnen mindestens einer Glasscheibe auf einer Auflagefläche einer Schwerkraftbiegeform,
(b) Erwärmen der Glasscheibe auf mindestens ihre Erweichungstemperatur,
(c) Erzeugen eines Überdrucks auf der von der Auflagefläche abgewandten Oberfläche der mindestens einen Glasscheibe mittels eines oberes Formgebungswerkzeugs, das eine Abdeckung aufweist, welche einen in Richtung der Schwerkraftbiegeform geöffneten Hohlraum ausbildet, und mit einer auf einem Randabschnitt der Abdeckung angeordneten Dichtlippe ausgestattet ist, welche die von der Auflagefläche abgewandte Oberfläche der mindestens einen Glasscheibe berührt, wobei der Überdruck erzeugt wird, indem ein Gas in den Hohlraum eingeleitet wird,
(c) Abkühlen der Glasscheibe.

Die Vorrichtung und das Verfahren werden im Folgenden gemeinsam vorgestellt, wobei sich Erläuterungen und bevorzugte Ausgestaltungen gleichermaßen auf Vorrichtung und Verfahren beziehen.

Das mit der erfindungsgemäßen Vorrichtung durchzuführende Biegeverfahren kann als überdruckunterstütztes Schwerkraftbiegen bezeichnet werden. Wie bei einem herkömmlichen Schwerkraftbiegeverfahren wirkt die Schwerkraft auf die erweichte Glasscheibe, die sich infolgedessen an die Biegeform anlegt. Dieser Vorgang wird aber dadurch unterstützt, dass die Glasscheibe mit einem Überdruck beaufschlagt wird. Dadurch wird zum einen die Verformung beschleunigt, so dass die gewünschte Form der Glasscheibe schneller erreicht ist. Zum anderen kann schon bei geringeren Temperaturen eine hinreichende Verformung erreicht werden. Somit können die Produktionskosten gesenkt und Zykluszeiten verkürzt werden.

Die erfindungsgemäße Vorrichtung zum Biegen von mindestens einer Glasscheibe umfasst mindestens eine untere Schwerkraftbiegeform und ein oberes Formgebungswerkzeug. Die zu biegende Glasscheibe wird auf der Schwerkraftbiegeform abgelegt und zwischen der Schwerkraftbiegeform und dem oberen Formgebungswerkzeug angeordnet.

Erfindungsgemäß wird das Formgebungswerkzeug mittels einer Dichtlippe mit der Glasscheibe in Kontakt gebracht. Durch die erfindungsgemäße Dichtlippe kann eine schlüssige Verbindung zwischen Formgebungswerkzeug und Glasscheibe hergestellt werden, wodurch ein höherer Überdruck erzeugt werden kann. Dadurch wird eine höhere Effizienz des Glasbiegeverfahrens erreicht. Durch die Dichtlippe wird zudem die Gefahr von Schädigungen am Glas verringert gegenüber von Formgebungswerkzeugen, die über ihre metallenen Kontaktflächen mit dem Glas kontaktiert werden. Das sind große Vorteile der vorliegenden Erfindung.

Die Erfindung umfasst auch eine Anordnung zum Biegen mindestens einer Glasscheibe, umfassend die erfindungsgemäße Vorrichtung und eine auf der Auflagefläche der Schwerkraftbiegeform angeordnete Glasscheibe.

Die Schwerkraftbiegeform weist eine Auflagefläche auf, die dazu geeignet ist, mindestens eine Glasscheibe darauf anzuordnen. Die Auflagefläche legt die Form der gebogenen Glasscheibe fest. Wird die Glasscheibe auf mindestens ihre Erweichungstemperatur erhitzt, so legt sie sich unter dem Einfluss der Schwerkraft an die Auflagefläche an, wodurch die gewünschte Form erreicht wird. Eine Schwerkraftbiegeform ist eine sogenannte untere Form, auf die die Scheibe abgelegt werden kann, so dass die Auflagefläche die untere, dem Erdboden zugewandte Oberfläche der Glasscheibe berührt. Üblicherweise steht der Randbereich der Glasscheibe umlaufend über die Auflagefläche über.

Die vorliegende Erfindung ist nicht auf eine bestimmte Art von Schwerkraftbiegeform beschränkt. Die Auflagefläche ist bevorzugt konkav ausgebildet. Unter einer konkaven Form wird dabei eine Form verstanden, bei der die Ecken und Ränder der Glasscheibe im bestimmungsgemäßen Kontakt mit der Auflagefläche in Richtung von der Biegeform weg gebogen sind.

Die Auflagefläche kann beispielsweise vollflächig ausgebildet sein und vollflächig mit der Glasscheibe in Kontakt gebracht werden. In einer bevorzugten Ausgestaltung weist die Schwerkraftbiegeform aber eine rahmenartige Auflagefläche auf. Lediglich die rahmenartige Auflagefläche steht mit der Glasscheibe in direktem Kontakt, während der größte Teil der Scheibe keinen direkten Kontakt zum Werkzeug hat. Dadurch lassen sich Scheiben mit besonders hoher optische Qualität erzeugen. Ein solches Werkzeug kann auch als Ring (Biegering) oder Rahmen (Rahmenform) bezeichnet werden. Der Begriff "rahmenartige Auflagefläche" im Sinne der Erfindung dient lediglich zur Abgrenzung des erfindungsgemäßen Werkzeugs von einer vollflächigen Form. Die Auflagefläche muss keinen vollständigen Rahmen bilden, sondern kann auch unterbrochen sein. Die Auflagefläche ist in Form eines vollständigen oder unterbrochenen Rahmens ausgebildet.

Die Breite der rahmenförmigen Auflagefläche beträgt bevorzugt von 0,1 cm bis 20cm, besonders bevorzugt von 0,1 cm bis 5 cm, beispielsweise 0,3 cm.

Die von der Schwerkraftbiegeform abgewandte Oberfläche der Glasscheibe wird erfindungsgemäß mit einem Überdruck beaufschlagt. Die von der Schwerkraftbiegeform abgewandte Oberfläche der Glasscheibe kann auch als obere Oberfläche bezeichnet werden, und die der Schwerkraftbiegeform zugewandte Oberfläche als untere Oberfläche. Unter einem Überdruck wird im Sinne der Erfindung ein Druck verstanden, welcher höher ist als der Umgebungsdruck. Durch den Überdruck wird die erweichte Glasscheibe gleichsam in die Biegeform hineingedrückt, wodurch die Schwerkraftwirkung unterstützt wird.

Das obere Formgebungswerkzeug ist während des Biegevorgangs gegenüberliegend der Auflagefläche der Schwerkraftbiegeform angeordnet, so dass eine Glasscheibe zwischen der Schwerkraftbiegeform und dem Formgebungswerkzeug angeordnet werden kann. Es ist dazu geeignet, einen Überdruck auf der von der Auflagefläche abgewandten Oberfläche der auf der Auflagefläche angeordneten Glasscheibe zu erzeugen. Das Formgebungswerkzeug ist nicht als Form mit vollflächiger Kontaktfläche, sondern als Hohlform ausgebildet. Das Formgebungswerkzeug weist eine Abdeckung auf, beispielsweise gefertigt aus einem Metallblech. Die Abdeckung ist so geformt, dass sie einen Hohlraum ausbildet. Der Hohlraum ist kein abgeschlossener Hohlraum, sondern weist eine großflächige Öffnung auf, die der Schwerkraftbiegeform zugewandt ist. Man kann das Werkzeug auch als glockenartig oder haubenartig bezeichnen.

Das Formgebungswerkzeug ist mit mindestens einer Dichtlippe ausgestattet. Die Dichtlippe dient der Kontaktierung mit der oberen Oberfläche der zu biegenden Glasscheibe. Die Dichtlippe ist auf einem umlaufenden Randabschnitt der Abdeckung angeordnet, insbesondere auf der dem Hohlraum zugewandten Oberfläche des Randabschnitts. Der Hohlraum des Formgebungswerkzeug, welcher erfindungsgemäß zum Schwerkraftbiegewerkzeug und zur Glasscheibe hin geöffnet ist, wird durch die Glasscheibe über die Dichtlippe gleichsam verschlossen, so dass wirkungsvoll ein Überdruck im Hohlraum und auf der oberen Oberfläche der Glasscheibe erzeugt werden kann. Mit Randabschnitt wird ein dem Rand zugeordneter Bereich der Abdeckung bezeichnet, wobei die Dichtlippe typischerweise einen Abstand zur Seitenkante der Abdeckung aufweist.

Die Dichtlippe berührt die Glasscheibe umlaufend in ihrem Randbereich, so dass auf dem Großteil der oberen Oberfläche der erfindungsgemäße Überdruck erzeugt werden kann. Der Kontaktbereich zwischen der Dichtlippe und der Oberfläche der Glasscheibe weist bevorzugt einen Abstand von höchstens 20 cm zur Seitenkante der Glasscheibe auf, besonders bevorzugt höchstens 10 cm. Der Überdruck wird bevorzugt auf mindestens 80% der Oberfläche erzeugt, wobei die nicht mit Überdruck beaufschlagten Bereiche der Oberfläche in ihrem Randbereich angeordnet sind außerhalb des von der Dichtlippe umgebenen Bereichs. Der durch das obere Formgebungswerkzeug erzeugte Druck ist homogen auf der Oberfläche verteilt.

Der Überdruck sollte auf einem möglichst großen Anteil der Oberfläche der Glasscheibe erzeugt werden. Zumindest sollte der Überdruck erzeugt werden auf den Bereichen der Glasscheibe, die auf der Auflagefläche der Schwerkraftbiegeform aufliegen, sowie im Falle einer rahmenartigen Auflagefläche die von ihr umschlossenen Bereiche.

Die Dichtlippe ist bevorzugt ohne Unterbrechung umlaufend ausgebildet. Die Dichtlippe kann aber grundsätzlich auch Unterbrechungen aufweisen. Die Unterbrechungen sollten dabei so dimensioniert sein, dass der Überdruck im Hohlraum nicht zu schnell abgebaut wird. Es kann eine einzige Dichtlippe vorhanden sein, die entlang des umlaufenden Randabschnitts der Abdeckung entsprechend umgebogen wird. Es können aber auch mehrere Dichtlippen zusammengesetzt werden.

Die erfindungsgemäße Vorrichtung erfasst außerdem Mittel, um die Schwerkraftbiegeform und das Formgebungswerkzeug gegeneinander zu bewegen. Dadurch werden die Schwerkraftbiegeform und das Formgebungswerkzeug, nachdem die Glasscheibe auf die Schwerkraftbiegeform aufgelegt worden ist, einander angenähert, so dass das Formgebungswerkzeug mit der Glasscheibe in Kontakt gebracht wird. Die Annäherung kann durch Bewegung der Schwerkraftbiegeform, des Formgebungswerkzeugs oder beidem erfolgen. In einer bevorzugten Ausführung wird das Formgebungswerkzeug bewegt und auf die Glasscheibe abgesenkt, während die Schwerkraftbiegeform keine Vertikalbewegung ausführt.

Die erfindungsgemäße Vorrichtung erfasst außerdem Mittel zum Heizen der Glasscheibe auf Erweichungstemperatur. Typischerweise sind die Schwerkraftbiegeform und das obere Formgebungswerkzeug innerhalb eines beheizbaren Biegeofens oder einer beheizbaren Biegekammer angeordnet. Die Glasscheibe kann zum Erwärmen eine gesonderte Kammer durchlaufen, beispielsweise einen Tunnelofen.

Der Überdruck wird erzeugt, indem ein Gas in den Hohlraum des Formgebungswerkzeugs eingeleitet wird. Das Formgebungswerkzeug ist dazu mit Mitteln ausgestattet ist, ein Gas in den Hohlraum einzuleiten, um den Überdruck zu erzeugen. Dazu ist bevorzugt ein Rohr (Einströmrohr) in die Abdeckung eingelassen, welches aus der äußeren Umgebung in den Hohlraum führt. Über das Rohr wird das Gas in den Hohlraum eingeleitet. Das Gas ist in einer bevorzugten Ausführung Luft, insbesondere Druckluft, weil diese kostengünstig zu erzeugen ist. Es können aber prinzipiell auch andere Gase verwendet werden, beispielsweise Kohlendioxid oder Stickstoff. Die Luft kann auf beliebige Weise durch das Rohr in den Hohlraum befördert werden, beispielsweise durch Venturi-Düsen oder einen Ventilator.

Das einströmende Gas ist bevorzugt erwärmt, um die Glasscheibe beim Biegeprozess, der typischerweise bei erhöhten Temperaturen stattfindet, nicht abzukühlen. Die Temperatur des Gases entspricht bevorzugt in etwa der Temperatur der Glasscheibe.

Im Hohlraum ist bevorzugt ein Prallblech gegenüberliegend dem Rohrauslass angeordnet, so dass einströmendes Gas auf das Prallblech trifft. Dadurch wird verhindert, dass einströmendes Gas direkt auf die Glasscheibe trifft und es kann im gesamten Hohlraum, beziehungsweise auf dem gesamten von der Dichtlippe begrenzten Oberflächenbereich ein homogener Überdruck erzeugt werden.

Die erfindungsgemäße Dichtlippe ist bevorzugt aus einem Filz oder Vlies gefertigt. Besonders bevorzugt ist in dem Filz oder Vlies ein Band angeordnet zur Beschwerung der Dichtlippe. So kann die Dichtlippe sicher mit der Glasoberfläche in Kontakt gehalten werden. Ein Filz- oder Vliesstreifen kann beispielsweise um das Band umgeschlagen werden. Der Filz oder das Vlies ist bevorzugt metallhaltig, besonders bevorzugt edelstahlhaltig. Der Filz oder das Vlies ist bevorzugt ein metallhaltiger Filz oder Metallvlies, besonders bevorzugt ein edelstahlhaltiger Filz oder Edelstahlvlies. Diese Materialien weisen einerseits eine für eine industrielle Massenfertigung ausreichende Stabilität auf und sind andererseits ausreichend weich, um die Glasoberfläche nicht zu beschädigen. Die Materialstärke des Filz oder Vlies beträgt bevorzugt von 0,1 mm bis 10 mm, besonders bevorzugt von 1 mm bis 5 mm.

Das Band (Beschwerungsband) enthält bevorzugt Glasfasern und/oder Metallfasern, besonders bevorzugt ein Glasfaser-Metallfaser-Gemisch. Die Dicke des Bandes beträgt bevorzugt von 1 mm bis 100 mm, besonders bevorzugt von 5 mm bis 30 mm.

Die Abdeckung weist bevorzugt eine Materialstärke von höchstens 5 mm auf, besonders bevorzugt von 2 mm bis 4 mm. Durch diese geringen Materialstärken kann das Gewicht des Formgebungswerkzeugs gering gehalten werden. Die Abdeckung besteht bevorzugt aus Stahl oder Edelstahl.

Der Randabschnitt der Abdeckung, auf dem die Dichtlippe angeordnet ist, ist in einer vorteilhaften Ausgestaltung in bestimmungsgemäßer Anordnung des Formgebungswerkzeugs nach unten gerichtet. Der Randabschnitt ist bevorzugt im Wesentlichen vertikal angeordnet. Dadurch kann das Formgebungswerkzeug vorteilhaft mit der Glasscheibe in Kontakt gebracht werden. Der nach unten gerichtete Randabschnitt wird häufig auch als Schürze bezeichnet. Die Seitenkante der Abdeckung kann am Ende des nach unten gerichteten Randabschnitts angeordnet sein und nach unten weisen. Es beeinträchtigt die Funktion aber nicht, wenn beispielsweise das Ende des Randabschnitts, wo die Dichtlippe nicht angeordnet ist, umgebogen ist, so dass die Seitenkante nicht nach unten weist.

In einer vorteilhaften Ausgestaltung der Erfindung ist die Vorrichtung so bemessen und konfiguriert, dass die Dichtlippe beim Biegen vollständig oberhalb der Oberfläche der zu biegenden Glasscheibe angeordnet ist. Mit oberhalb ist dabei im Sinne der Erfindung gemeint, dass die Projektion der Dichtlippe auf die Ebene der Glasscheibe innerhalb der Fläche der Glasscheibe angeordnet ist. Die Dichtlippe steht nicht über die Seitenkanten der zu biegenden Glasscheibe über. Der Randabschnitt der Abdeckung beziehungsweise der Kontaktbereich zwischen Abdeckung und Dichtlippe ist oberhalb der Glasscheibe angeordnet. Da die Kraft, die durch das Absenken des Formgebungswerkzeugs entsteht und den Hohlraum abdichtet, so direkt auf die obere Oberfläche wirkt, kann eine bessere Abdichtung und somit ein höherer Überdruck erzeugt werden, wodurch die Effizienz des Biegeverfahrens steigt. In dieser Ausgestaltung muss die Dichtlippe über den Randabschnitt der Abdeckung überstehen und aus dem Hohlraum herausragen.

In einer weiteren vorteilhaften Ausgestaltung der Erfindung ist die Vorrichtung so bemessen und konfiguriert, dass der Randabschnitt die zu biegende Glasscheibe beim Biegen umgibt. Der Randabschnitt (die "Schürze") überlappt also gleichsam die Glasscheibe, so dass die Glasscheibe - zumindest in ihrem planen Ausgangszustand - vollständig innerhalb des Hohlraums des Formgebungswerkzeugs angeordnet ist. Die Dichtlippe erstreckt sich über die über die Seitenkante der zu biegenden Glasscheibe hinaus. Die Dichtlippe verläuft vom die Glasscheibe umgebenden Randabschnitt der Abdeckung bis auf die obere Oberfläche der Glasscheibe. Die Dichtlippe ist in dieser Ausgestaltung vollständig innerhalb des Hohlraums des Formgebungswerkzeugs angeordnet und steht nicht über den Randabschnitt über. Der Vorteil liegt darin, dass das Formgebungswerkzeug nicht auf die Größe der zu biegenden Glasscheibe angepasst sein muss, sondern dass verschiedene Glasscheiben unterschiedlicher Größe mit demselben Werkzeug bearbeitet werden können, solange die Glasscheibe in den Hohlraum passt und die Dichtlippe ausreichend lang ist. Die unterschiedlichen Größen der Glasscheiben werden durch die Dichtlippe gleichsam kompensiert.

Es ist natürlich auch möglich, beim Formgebungswerkzeug der letztgenannten vorteilhaften Ausgestaltung die Dichtlippe so zu verlängern, dass sie sich aus dem Hohlraum hinaus erstreckt, und so das Formgebungswerkzeug mit der Glasscheibe in Kontakt zu bringen, ohne dass die Glasscheibe innerhalb des Hohlraums angeordnet ist. In beiden Varianten umgibt die Projektion des Kontaktbereichs zwischen Dichtlippe und Abdeckung auf die Glasscheibenebene die Glasscheibe.

Der Überdruck auf der oberen Oberfläche der Glasscheibe beträgt bevorzugt von 5 mbar bis 50 mbar beträgt, besonders bevorzugt von 10 mbar bis 30 mbar. Damit können besonders gute Ergebnisse hinsichtlich der Biegung erzielt werden. Der erforderliche Druck hängt auch von der Biegetemperatur ab - je höher die Biegetemperatur ist, desto erweichter ist die Glasscheibe und desto geringer der nötige Überdruck. Mit Überdruck wird die positive Druckdifferenz zum Umgebungsdruck bezeichnet.

Ein Vorteil der Erfindung ist, dass durch die Überdruck-Unterstützung die gewünschte Scheibenform schneller erreicht werden kann als beim herkömmlichen Schwerkraftbiegen. Dadurch können in der industriellen Massenfertigung kürzere Taktzeiten realisiert werden. Der Überdruck wird in einer vorteilhaften Ausführung über einen Zeitraum von höchstens 100 Sekunden auf der oberen Oberfläche der Glasscheibe erzeugt, bevorzugt höchstens 60 Sekunden, besonders bevorzugt höchstens 30 Sekunden. Der Zeitraum, über den der Überdruck auf der Oberfläche erzeugt wird, kann beispielsweise von 5 Sekunden bis 30 Sekunden betragen.

Ein weiterer Vorteil der Erfindung ist, dass die Biegung durch die Überdruck-Unterstützung bei geringeren Temperaturen erreicht werden kann als beim herkömmlichen Schwerkraftbiegen. Dadurch kann Energie eingespart werden, weil die Biegekammer weniger stark beheizt werden muss. Kalk-Natron-Glas, dem typischen Glas für Fensterscheiben, wird üblicherweise bei etwa 630 °C gebogen. Durch die erfindungsgemäße Überdruck-Unterstützung kann bereits bei geringeren Temperaturen, beispielsweise 610 °C mit ausreichender Geschwindigkeit gebogen werden. Die Maximaltemperatur, auf die die Glasscheibe erwärmt wird, beträgt daher in einer vorteilhaften Ausführung kleiner 630 °C, bevorzugt kleiner 620 °C, wenn die Glasscheibe Kalk-Natron-Glas enthält oder daraus besteht.

Die zu biegende Glasscheibe kann aber auch andere Glassorten wie Borsilikatglas oder Quarzglas enthalten. Die Dicke der Glasscheibe beträgt typischerweise von 0,2 mm bis 10 mm, bevorzugt 0,5 mm bis 5 mm.

Ein weiterer Vorteil der Erfindung besteht darin, dass durch die Überdruckunterstützung komplexere Scheibenformen erzeugt werden können als durch reines Schwerkraftbiegen. Bei herkömmlichen mehrstufigen Biegeprozessen, ist es üblich, bis zum Erreichen der Endform der Glasscheibe mehrere untere Biegeformen einzusetzen, beispielsweise eine erste untere Form zum Vorbiegen mittels Schwerkraft und eine zweite untere Form zum Pressbiegen. Die Scheibe kann dazu von der ersten Form abgehoben und auf die zweite Form aufgesetzt werden. Alternativ sind auch untere Biegeformen bekannt, die über zwei verschiedene Auflageflächen verfügen, die gegeneinander bewegt werden können, so dass eingestellt werden kann, auf welcher der Auflageflächen die Glasscheibe aufliegt. Da mit dem erfindungsgemäßen Verfahren bereits eine komplexere Vorbiegung erzeugt werden kann, ist es häufig nicht nötig, vor einem finalen Biegeschritt die untere Biegeform zu wechseln. In einer bevorzugten Ausführung wird daher während des gesamten Biegeverfahrens bis zum Erreichen der erwünschten Endbiegung keine weitere untere Form außer der erfindungsgemäßen Schwerkraftbiegeform eingesetzt. An das erfindungsgemäße überdruckunterstützte Schwerkraftbiegen können sich weitere Biegeschritte anschließen, wie beispielsweise ein Pressbiegeschritt. Bei diesen weiteren Schritten bleibt die Glasscheibe aber auf der Schwerkraftbiegeform angeordnet. Das hat den Vorteil, dass weniger oder weniger komplexe Biegeformen im Biegeofen eingesetzt werden, also insgesamt weniger Material von außen in den Biegeofen eingebracht wird. Dadurch wird der Biegeofen weniger stark abgekühlt, was eine Energieersparnis hinsichtlich der Heizleistung zur Folge hat. Zudem sind weniger komplexe Formen auch weniger fehleranfällig.

Die Abfolge der Verfahrensschritte ist nicht so zu interpretieren, dass erst dann Maßnahmen zur Erzeugung des Überdrucks getroffen werden, wenn die Erweichungstemperatur überschritten ist. Vielmehr kann die Glasscheibe auch schon während des Erwärmens mit dem Überdruck beaufschlagt werden. Der Überdruck kann seine Wirkung zwar erst nach Erreichen der Erweichungstemperatur entfalten, aus verfahrenstechnischen Gründen kann es aber einfacher sein, den Überdruck kontinuierlich zu erzeugen.

Das erfindungsgemäße überdruckunterstützte Schwerkraftbiegen kann der einzige Biegeschritt sein oder auch Teil eines mehrstufigen Biegeverfahrens, bei dem weitere Biegeschritte vorausgehen oder nachfolgen. Beispielsweise können zwischen dem überdruckunterstützte Schwerkraftbiegen und dem Abkühlen der Glasscheibe weitere Biegeschritte erfolgen, beispielsweise mittels Schwerkraftbiegen, Pressbiegen oder Saugbiegen. Die Glasscheibe kann hierfür von der erfindungsgemäßen Schwerkraftbiegeform auf weitere Biegeformen übergeben werden.

Das Abkühlen der Glasscheibe kann auf der erfindungsgemäßen Schwerkraftbiegeform erfolgen oder auch auf einer weiteren Form, auf die die Scheibe übergeben wird. Das Abkühlen kann bei Umgebungstemperatur oder durch aktive Kühlung erfolgen.

Die erfindungsgemäße Schwerkraftbiegeform kann beweglich ausgebildet sein, beispielsweise auf einem Wagen gelagert. So kann die zu biegende Glasscheibe auf der Schwerkraftbiegeform unter das obere Formgebungswerkzeug transportiert werden. Die Schwerkraftbiegeform kann zum Erwärmen einen Ofen durchlaufen, wobei die Glasscheibe auf Biegetemperatur erwärmt oder zumindest vorgewärmt wird. Durch eine räumliche Trennung des Aufwärmens und des überdruckunterstützen Biegens in verschiedenen Kammern eines Biegeofens können höhere Taktzeiten erreicht werden, als wenn die Scheibe erst in der Biegekammer erwärmt wird. Typische Biegetemperaturen betragen von 500 °C bis 700 °C, bevorzugt von 550 °C bis 650 °C.

Auch mehrere, beispielsweise zwei aufeinander liegende Glasscheiben können durch die erfindungsgemäße Vorrichtung und das erfindungsgemäße Verfahren simultan gebogen werden. Dies kann insbesondere gewünscht sein, wenn zwei Einzelscheiben später zu einem Verbundglas laminiert werden sollen, damit ihre Form optimal aufeinander abgestimmt ist. Die Glasscheiben werden dazu flächig aufeinander angeordnet und gemeinsam simultan kongruent gebogen. Zwischen den Glasscheiben wird ein Trennmittel angeordnet, beispielsweise ein Trennpuder oder ein Gewebe, so dass die Glasscheiben nach dem Biegen wieder voneinander gelöst werden können. In einer vorteilhaften Ausführung wird das Verfahren auf mehrere, insbesondere zwei aufeinander liegende Glasscheiben angewandt.

Die Erfindung umfasst außerdem die Verwendung eines oberen Formgebungswerkzeugs, das eine Abdeckung aufweist, welche einen in Richtung der Schwerkraftbiegeform geöffneten Hohlraum ausbildet, und mit einer auf einem Randabschnitt der Abdeckung angeordneten Dichtlippe ausgestattet ist, zur Unterstützung eines Schwerkraftbiegeprozesses, wobei mit dem Formgebungswerkzeug ein Überdruck auf der von einer Schwerkraftbiegeform abgewandten Oberfläche einer zu biegenden Glasscheibe erzeugt wird, indem ein Gas in den Hohlraum eingeleitet wird. Die Dichtlippe (7) wird dazu mit der Oberfläche (O) der Glasscheibe (I) in Kontakt gebracht.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine erfindungsgemäße Vorrichtung während des erfindungsgemäßen Verfahrens,
- Fig. 2: einen Querschnitt durch eine Ausgestaltung des erfindungsgemäßen oberen Formgebungswerkzeugs,
- Fig. 3: eine vergrößerte Darstellung des Ausschnitts Z aus Figur 2,
- Fig. 4: einen Querschnitt durch eine weitere Ausgestaltung des erfindungsgemäßen oberen Formgebungswerkzeugs während des erfindungsgemäßen Verfahrens und
- Fig. 5: ein Flussdiagramm einer Ausführungsform des erfindungsgemäßen Verfahrens.

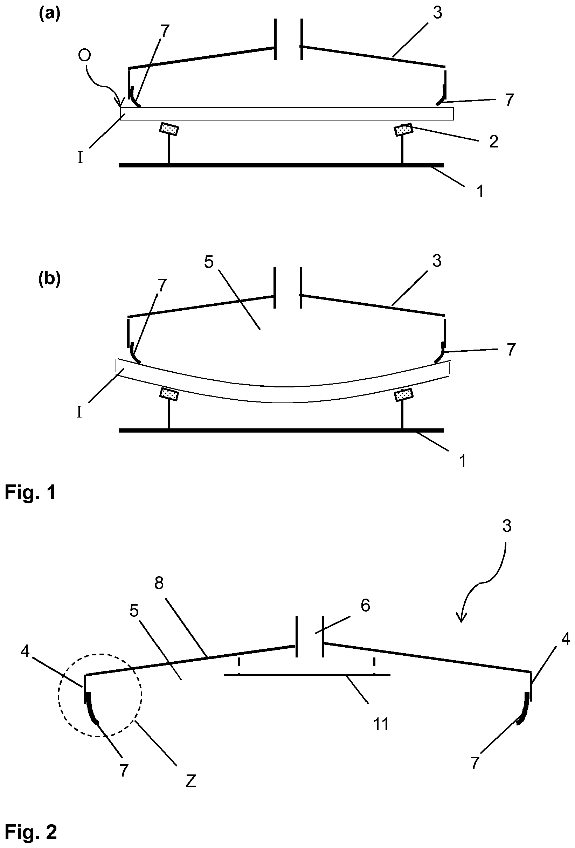

Figur 1 zeigt eine erfindungsgemäße Vorrichtung während des erfindungsgemäßen Verfahrens zum Biegen einer Glasscheibe I. Die im Ausgangszustand plane Glasscheibe I wird auf die rahmenartige Auflagefläche 2 einer Schwerkraftbiegeform 1 abgelegt (Fig. 1a). Wie beim Schwerkraftbiegen üblich wird die Glasscheibe I auf eine Biegetemperatur erwärmt, die mindestens der Erweichungstemperatur entspricht. Die erweichte Glasscheibe I schmiegt sich daraufhin unter dem Einfluss der Schwerkraft an die Auflagefläche 2 an (Fig. 1b).

Erfindungsgemäß wird das Schwerkraftbiegen durch ein oberes Formgebungswerkzeug 3 unterstützt, welches einen Überdruck auf der von der Auflagefläche 2 abgewandten, nach oben weisenden Oberfläche O der Glasscheibe I erzeugt. Das obere Formgebungswerkzeug 3 ist ein glocken- oder haubenartiges Werkzeug, das einen Hohlraum 5 aufweist, der der Glasscheibe I zugewandt ist. Das obere Formgebungswerkzeug 3 steht mit der oberen Oberfläche O der Glasscheibe I über eine umlaufende Dichtlippe in Kontakt, so dass die Glasscheibe I den Hohlraum 5 verschließt. Durch in den Hohlraum 5 einfließende Druckluft wird der Überdruck auf der Oberfläche O erzeugt.

Durch den Überdruck wird die Verformung der Glasscheibe I unter dem Einfluss der Schwerkraft unterstützt. Dadurch kann die gewünschte Form schon bei geringeren Biegetemperaturen und in kürzerer Zeit erreicht werden. Außerdem können komplexere Scheibenformen realisiert werden als durch reines Schwerkraftbiegen. Das Kontaktieren des oberen Formgebungswerkzeugs mit der Dichtlippe 7 führt zu einem effektiven Verschluss des Hohlraums 5, so dass ein vorteilhaft hoher Überdruck erzeugt werden kann. Dadurch, dass die Glasscheibe I mit der flexiblen Dichtlippe 7 berührt wird statt der starren, metallenen Abdeckung des Formgebungswerkzeugs, können Beschädigungen oder eine Herabsetzung der optischen Qualität der Glasscheibe I vermieden werden. Das sind große Vorteile der vorliegenden Erfindung.

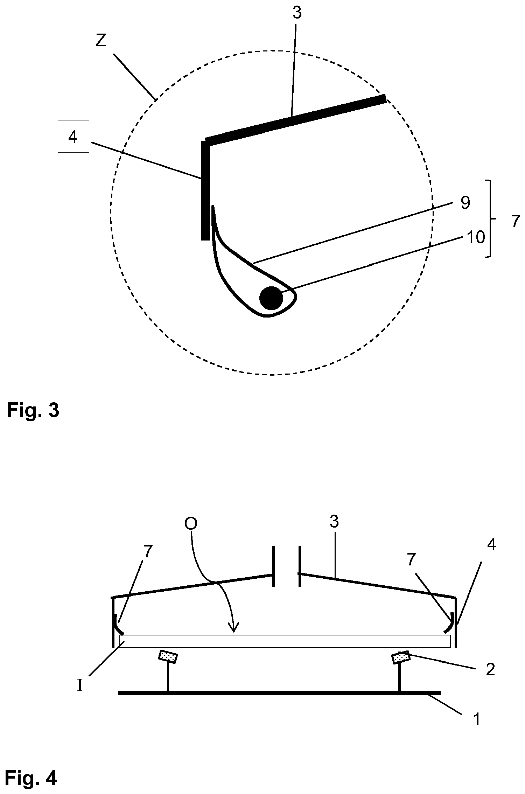

Figur 2 und Figur 3 zeigen eine detailliertere Darstellung des oberen Formgebungswerkzeugs 3 aus Figur 1. Das Formgebungswerkzeug 3 weist eine Abdeckung 8 auf, die aus einem nur 3 mm starken Stahlblech gebildet ist. Dadurch weist das Formgebungswerkzeug 3 nur ein geringes Gewicht auf. Die Abdeckung 8 bildet einen Hohlraum 5 aus, der in Richtung der Glasscheibe I geöffnet ist. Ein Randabschnitt 4 der Abdeckung 8 verläuft im Wesentlichen vertikal (eine sogenannte "Schürze"). An diesem Randabschnitt ist die Dichtlippe 7 angebracht, und zwar auf der dem Hohlraum 5 zugewandten Seite.

Der vertikale Randabschnitt 4 der Abdeckung 8 und die Dichtlippe 7 sind, wie in Figur 1 dargestellt, vollständig oberhalb der Glasscheibe I angeordnet. Der Randabschnitt 4 ist somit beim Biegen auf die Oberfläche O gerichtet. Da die durch das obere Formgebungswerkzeug 3 erzeugte Anpresskraft direkt auf die Oberfläche O wirkt, wird eine effiziente Abdichtung des Hohlraums 5 erreicht und es kann ein hoher Überdruck erzeugt werden. Die Dichtlippe 7 erstreckt sich aus dem Hohlraum 5 heraus.

Die umlaufende Dichtlippe 7 ist aus einem Edelstahlvlies 9 gefertigt mit einer Materialstärke von 3 mm. Ein Streifen des Edelstahlvlieses 9 ist um eine Band 10 umgelegt, welches so innerhalb der Dichtlippe angeordnet ist und eine Beschwerung der Dichtlippe 7 bewirkt. Das Band besteht aus einem Glasfaser-Metallfaser-Gemisch und weist einen etwa kreisförmigen Querschnitt mit einem Durchmesser von 20 mm auf. Eine solche Dichtlippe 7 stellt eine gute Abdichtung des Hohlraums 5 sicher, ist ausreichend flexibel, um Beeinträchtigungen der Glasscheibe I zu vermeiden und ausreichend stabil, um industriell eingesetzt werden zu können.

Die Abdeckung 8 ist mittig mit einem Einströmrohr 6 ausgestattet, über das Druckluft in den Hohlraum 5 einfließen kann, um den Überdruck zu erzeugen. Um ein direktes Auftreffen der einströmenden Luft auf die Oberfläche O zu vermeiden und einen homogenen Überdruck auf der Oberfläche O zu erzeugen, ist im Hohlraum 5 der Öffnung des Einströmrohrs 6 gegenüberliegend ein Prallblech 11 angeordnet, auf das die einströmende Luft trifft.

Figur 4 zeigt eine weitere Ausgestaltung des erfindungsgemäßen oberen Formgebungswerkzeugs 3 während des erfindungsgemäßen Verfahrens. Auch hier weist die Abdeckung 8 einen vertikal verlaufenden Randabschnitt 4 auf. Das Formgebungswerkzeug 3 ist aber größer ausgebildet, so dass der vertikale Randabschnitt 4 die Glasscheibe 1 umgibt und die Glasscheibe I dadurch im Hohlraum 5 angeordnet ist. Die Dichtlippe 7 erstreckt sich von dem Randabschnitt auf die Oberfläche O der Glasscheibe I.

Diese Ausgestaltung hat den Vorteil, dass das obere Formgebungswerkzeug 3 nicht spezifisch für einen bestimmten Scheibentyp gefertigt werden muss. Stattdessen können bei geeigneter Bemessung der Dichtlippe 7 auch Glasscheiben I unterschiedlicher Größe mit demselben Formgebungswerkzeug 3 gebogen werden. Die Dichtungswirkung der Dichtlippe 7 ist dagegen etwas geringer als in der Ausgestaltung der Figur 1.

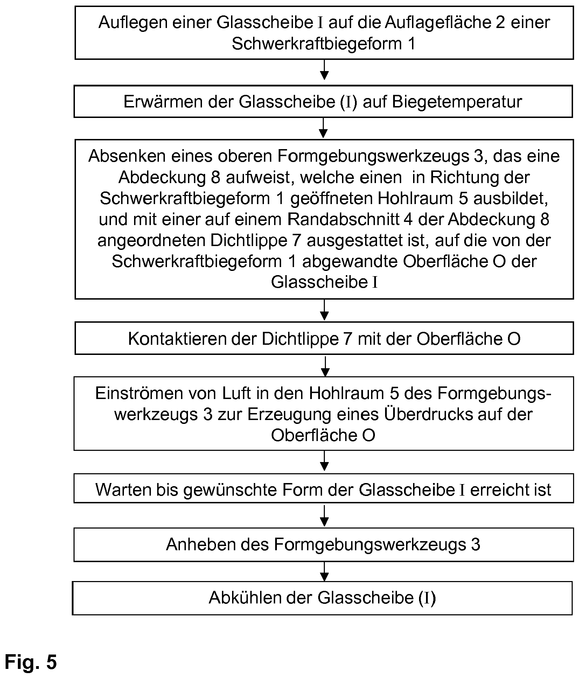

Figur 5 zeigt ein Ausführungsbeispiel des erfindungsgemäßen Verfahrens anhand eines Flussdiagramms.

### Beispiel

In einer Versuchsreihe wurden verschiedene Biegeprozesse miteinander verglichen:
1. Herkömmliches Schwerkraftbiegen ohne Beaufschlagen mit Überdruck
2. Schwerkraftbiegen unter Verwendung eines oberen Formgebungswerkzeugs ohne Dichtlippe, das in einem Abstand von 5 mm zur oberen Oberfläche der Glasscheibe gehalten wurde (vgl. EP 0 706 978 A2, *soft seal*)
3. Erfindungsgemäßes Schwerkraftbiegen unter Verwendung eines oberen Formgebungswerkzeugs mit Dichtlippe

Die Scheiben wurden jeweils auf die Temperatur *T* erwärmt. Es wurde die Zeit *t* gemessen, welche nötig ist, um eine durch die Schwerkraftbiegeform festgelegte Endbiegung zu erreichen. Außerdem wurde die ungefähre Biegegeschwindigkeit v bestimmt.

Die Ergebnisse sind in Tabelle 1 zusammengefasst.

**Tabelle 1**

| | Biegeprozess | T | Überdruck | t | v |
|---|---|---|---|---|---|
| 1 | Schwerkraftbiegen | 630 °C | - | 120sec | 0,2 mm/s |
| 2 | Schwerkraftbiegen mit oberem Formgebungswerkzeug ohne Dichtlippe | 610 °C | 6 mbar | 50 s | 0,5 mm/s |
| 3 | **Erfindungsgemäß:** Schwerkraftbiegen mit oberem Formgebungswerkzeug mit Dichtlippe | 610 °C | 20 mbar | 25 s | 1 mm/s |

Wie der Tabelle zu entnehmen ist, kann durch das erfindungsgemäße Verfahren eine deutliche Zeitersparnis bei geringerer Biegetemperatur erreicht werden. Bei gleichen Bedingungen hinsichtlich der Lufteinströmung kann mit dem erfindungsgemäßen Werkzeug ein deutlich höherer Druck erzeugt werden als mit dem Vergleichswerkzeug ohne Dichtlippe. Das ist ein großer Vorteil der Erfindung.

### Bezugszeichenliste:

- (1): Schwerkraftbiegeform
- (2): Auflagefläche der Schwerkraftbiegeform 1

- (3): oberes Formgebungswerkzeug
- (4): Randabschnitt des Formgebungswerkzeugs 3
- (5): Hohlraum des Formgebungswerkzeugs 3
- (6): Einströmrohr des Formgebungswerkzeugs 3
- (7): Dichtlippe des Formgebungswerkzeugs 3
- (8): Abdeckung des Formgebungswerkzeugs 3
- (9): Filz/Vlies der Dichtlippe 7
- (10): Band der Dichtlippe 7
- (11): Prallblech des Formgebungswerkzeugs 3

- (I): Glasscheibe
- (O): obere Oberfläche der Glasscheibe I, von der Auflagefläche 2 abgewandt

- (Z): vergrößerter Abschnitt des Formgebungswerkzeugs 3

## Patentansprüche

1. Vorrichtung zum Biegen von mindestens einer Glasscheibe (I), mindestens umfassend
- eine Schwerkraftbiegeform (1) mit einer Auflagefläche (2), die dazu geeignet ist, mindestens eine Glasscheibe (I) darauf anzuordnen,
- ein oberes Formgebungswerkzeug (3) gegenüberliegend der Auflagefläche (2) angeordnet, das dazu geeignet ist, einen Überdruck auf der von der Auflagefläche (2) abgewandten Oberfläche (O) der auf der Auflagefläche (2) angeordneten mindestens einen Glasscheibe (I) zu erzeugen,
wobei das Formgebungswerkzeug (3) eine Abdeckung (8) aufweist, welche einen in Richtung der Schwerkraftbiegeform (1) geöffneten Hohlraum (5) ausbildet, und mit einer auf einem Randabschnitt (4) der Abdeckung (8) angeordneten Dichtlippe (7) ausgestattet ist zur Kontaktierung mit der von der Auflagefläche (2) abgewandten Oberfläche (O) der mindestens einen Glasscheibe (I),
und wobei das Formgebungswerkzeug (3) mit Mitteln ausgestattet ist, ein Gas in den Hohlraum (5) einzuleiten, um den Überdruck zu erzeugen.

2. Vorrichtung nach Anspruch 1, wobei der Kontaktbereich zwischen der Dichtlippe (7) und der Oberfläche (O) einen Abstand von höchstens 20 cm zur Seitenkante der Glasscheibe (I) aufweist.

3. Vorrichtung nach Anspruch 1 oder 2, wobei die Dichtlippe (7) aus einem Filz oder Vlies (9) gefertigt ist mit einem darin angeordneten Band (10).

4. Vorrichtung nach Anspruch 3, wobei der Filz oder das Vlies (9) metallhaltig ist, bevorzugt edelstahlhaltig.

5. Vorrichtung nach Anspruch 3 oder 4, wobei das Band (10) Glasfasern und/oder Metallfasern enthält, bevorzugt ein Glasfaser-Metallfaser-Gemisch.

6. Vorrichtung nach einem der Ansprüche 1 bis 5, wobei der Randabschnitt (4) nach unten gerichtet ist und bevorzugt im Wesentlichen vertikal angeordnet ist.

7. Vorrichtung nach einem der Ansprüche 1 bis 6, wobei die Schwerkraftbiegeform (1) eine rahmenartige, konkave Auflagefläche (2) aufweist.

8. Vorrichtung nach einem der Ansprüche 1 bis 7, wobei die Abdeckung (8) eine Materialstärke von höchstens 5 mm aufweist.

9. Verfahren zum Biegen mindestens einer Glasscheibe (I), mindestens umfassend die folgenden Verfahrensschritte:
(a) Anordnen mindestens einer Glasscheibe (I) auf einer Auflagefläche (2) einer Schwerkraftbiegeform (1),
(b) Erwärmen der Glasscheibe (I) auf mindestens ihre Erweichungstemperatur,
(c) Erzeugen eines Überdrucks auf der von der Auflagefläche (2) abgewandten Oberfläche (O) der mindestens einen Glasscheibe (I) mittels eines oberes Formgebungswerkzeugs (3), das eine Abdeckung (8) aufweist, welche einen in Richtung der Schwerkraftbiegeform (1) geöffneten Hohlraum (5) ausbildet, und mit einer auf einem Randabschnitt (4) der Abdeckung (8) angeordneten Dichtlippe (7) ausgestattet ist, welche die von der Auflagefläche (2) abgewandte Oberfläche (O) der mindestens einen Glasscheibe (I) berührt, wobei der Überdruck erzeugt wird, indem ein Gas in den Hohlraum (5) eingeleitet wird,
(d) Abkühlen der Glasscheibe (I).

10. Verfahren nach Anspruch 9, wobei die Dichtlippe (7) beim Biegen vollständig oberhalb der Oberfläche (O) der mindestens einen Glasscheibe (I) angeordnet ist.

11. Verfahren nach Anspruch 9 oder 10, wobei der Randabschnitt (4) die mindestens eine Glasscheibe (I) beim Biegen umgibt und sich die Dichtlippe (7) über die Seitenkante der Glasscheibe (I) hinaus erstreckt.

12. Verfahren nach einem der Ansprüche 9 bis 11, wobei der Überdruck von 5 mbar bis 50 mbar beträgt, bevorzugt von 10 mbar bis 30 mbar.

13. Verfahren nach einem der Ansprüche 9 bis 12, wobei der Überdruck für einen Zeitraum von höchstens 60 Sekunden auf der Oberfläche (O) der Glasscheibe (I) erzeugt wird.

14. Verfahren nach einem der Ansprüche 9 bis 13, wobei die Glasscheibe (I) Kalk-Natron-Glas enthält und die Maximaltemperatur, auf die die Glasscheibe (I) erwärmt wird, kleiner 630 °C, bevorzugt kleiner 620 °C beträgt.

15. Verwendung eines oberen Formgebungswerkzeugs (3), das eine Abdeckung (8) aufweist, welche einen in Richtung der Schwerkraftbiegeform (1) geöffneten Hohlraum (5) ausbildet, und mit einer auf einem Randabschnitt (4) der Abdeckung (8) angeordneten Dichtlippe (7) ausgestattet ist, zur Unterstützung eines Schwerkraftbiegeprozesses, wobei mit dem Formgebungswerkzeug (3) ein Überdruck auf der von einer Schwerkraftbiegeform (1) abgewandten Oberfläche (O) einer zu biegenden Glasscheibe (I) erzeugt wird, indem die Dichtlippe (7) mit der Oberfläche (O) der Glasscheibe (I) in Kontakt gebracht und ein Gas in den Hohlraum (5) eingeleitet wird.

## Claims

1. Device for bending at least one glass pane (I), at least comprising
- a gravity bending mould (1) with a supporting surface (2), which is suitable for arranging at least one glass pane (I) thereon,
- an upper shaping tool (3) arranged opposite the supporting surface (2), which upper shaping tool (3) is suitable for producing an overpressure on the surface (O) of the at least one glass pane (I) arranged on the supporting surface (2), which surface (O) faces away from the supporting surface (2),
wherein the shaping tool (3) has a cover (8) that forms a hollow space (5) open in the direction of the gravity bending mould (1) and is equipped with a sealing lip (7) arranged on an edge section (4) of the cover (8) for making contact with the surface (O) of the at least one glass pane (I), which surface (O) faces away from the supporting surface (2), and wherein the shaping tool (3) is equipped with means for introducing a gas into the hollow space (5) in order to produce the overpressure.

2. Device according to claim 1, wherein the contact region between the sealing lip (7) and the surface (O) has a distance of at most 20 cm from the side edge of the glass pane (I).

3. Device according to claim 1 or 2, wherein the sealing lip (7) is made of a felt or fleece (9) with a belt arranged therein (10).

4. Device according to claim 3, wherein the felt or the fleece (9) is metal-containing, preferably stainless-steel-containing.

5. Device according to claim 3 or 4, wherein the belt (10) contains glass fibres and/or metal fibres, preferably a glass fibre - metal fibre mixture.

6. Device according to one of claims 1 through 5, wherein the edge section (4) is directed downward and is preferably arranged substantially vertically.

7. Device according to one of claims 1 through 6, wherein the gravity bending mould (1) has a frame-like, concave supporting surface (2).

8. Device according to one of claims 1 through 7, wherein the cover (8) has a material thickness of at most 5 mm.

9. Method for bending at least one glass pane (I), at least comprising the following process steps:
(a) Arranging at least one glass pane (I) on a supporting surface (2) of a gravity bending mould (1),
(b) Heating the glass pane (I) to at least its softening temperature,
(c) Producing an overpressure on the surface (O) of the at least one glass pane (I) facing away from the supporting surface (2) using an upper shaping tool (3) that has a cover (8) that forms a hollow space (5) open in the direction of the gravity bending mould (1) and is equipped with a sealing lip (7) arranged on an edge section (4) of the cover (8), which contacts the surface (O) of the at least one glass pane (I) facing away from the supporting surface (2), wherein the overpressure is produced by introducing a gas into the hollow space (5),
(d) Cooling of the glass pane (I).

10. Method according to claim 9, wherein, during bending, the sealing lip (7) is arranged completely above the surface (O) of the at least one glass pane (I).

11. Method according to claim 9 or 10, wherein the edge section (4) surrounds the at least one glass pane (I) during bending and the sealing lip (7) extends beyond the side edge of the glass pane (I).

12. Method according to one of claims 9 through 11, wherein the overpressure is from 5 mbar to 50 mbar, preferably from 10 mbar to 30 mbar.

13. Method according to one of claims 9 through 12, wherein the overpressure is produced for a period of at most 60 seconds on the surface (O) of the glass pane (I).

14. Method according to one of claims 9 through 13, wherein the glass pane (I) contains soda lime glass and the maximum temperature to which the glass pane (I) is heated is less than 630 °C, preferably less than 620 °C.

15. Use of an upper shaping tool (3) that has a cover (8) that forms a hollow space (5) open in the direction of the gravity bending mould (1) and is equipped with a sealing lip (7) arranged on an edge section (4) of the cover (8), for assisting a gravity bending process, wherein, with the shaping tool (3), an overpressure is produced on the surface (O) of a glass pane (I) facing away from a gravity bending mould (1), by bringing the sealing lip (7) into contact with the surface (O) of the glass pane (I) and introducing a gas into the hollow space (5).

## Revendications

1. Dispositif de bombage d'au moins une feuille de verre (I), comportant au moins
- une forme de bombage par gravité (1) ayant une surface de support (2), qui est adaptée pour disposer au moins une feuille de verre (I) sur celle-ci ;
- un outil de formage supérieur (3) disposé à l'opposé de la surface de support (2), qui est adapté pour générer une surpression sur la surface (O) opposée à la surface de support (2) de ladite au moins une feuille de verre (I) disposée sur la surface de support (2),
dans lequel l'outil de formage (3) présente un capot (8), lequel forme un espace creux (5) ouvert en direction de la forme de bombage par gravité (1) et est doté d'une lèvre d'étanchéité (7) disposée sur une section de bordure (4) du capot (8) pour la mise en contact avec la surface (O) opposée à la surface de support (2) de ladite au moins une feuille de verre (I),
et dans lequel l'outil de formage (3) est doté de moyens pour introduire un gaz dans l'espace creux (5), pour générer la surpression.

2. Dispositif selon la revendication 1, dans lequel la région de contact entre la lèvre d'étanchéité (7) et la surface (O) présente une distance d'au plus 20 cm par rapport au bord latéral de la feuille de verre (I).

3. Dispositif selon l'une des revendications 1 ou 2, dans lequel la lèvre d'étanchéité (7) est réalisée à partir d'un feutre ou d'un voile (9) avec une bande (10) disposée dans celui-ci.

4. Dispositif selon la revendication 3, dans lequel le feutre ou le voile (9) contient un métal, de préférence un acier inoxydable.

5. Dispositif selon l'une des revendications 3 ou 4, dans lequel la bande (10) contient des fibres de verre et/ou des fibres métalliques, de préférence un mélange fibres de verres - fibres métalliques.

6. Dispositif selon l'une des revendications 1 à 5, dans lequel la section de bordure (4) est dirigée vers le bas et, de préférence, est disposée sensiblement verticalement.

7. Dispositif selon l'une des revendications 1 à 6, dans lequel la forme de bombage par gravité (1) présente une surface de support (2) concave, en forme de cadre.

8. Dispositif selon l'une des revendications 1 à 7, dans lequel le capot (8) présente une épaisseur de matériau d'au plus 5 mm.

9. Procédé de bombage d'au moins une feuille de verre (I), comportant au moins les étapes de procédé suivantes :
(a) disposer au moins une feuille de verre (I) sur une surface de support (2) d'une forme de bombage par gravité (1) ;
(b) chauffer la feuille de verre (I) à au moins sa température de ramollissement ;
(c) générer une surpression sur la surface (O) opposée à la surface de support (2) de ladite au moins une feuille de verre (I) au moyen d'un outil de formage supérieur (3), qui présente un capot (8), lequel forme un espace creux (5) ouvert en direction de la forme de bombage par gravité (1), et est doté d'une lèvre d'étanchéité (7) disposée sur une section de bordure (4) du capot (8), laquelle touche la surface (O) opposée à la surface de support (2) de ladite au moins une feuille de verre (I), la surpression étant générée par introduction d'un gaz dans l'espace creux (5) ;
(d) refroidir la feuille de verre (I).

10. Procédé selon la revendication 9, dans lequel la lèvre d'étanchéité (7) est disposée lors du bombage complètement au-dessus de la surface (O) de ladite au moins une feuille de verre (I).

11. Procédé selon l'une des revendications 9 ou 10, dans lequel la section de bordure (4) entoure ladite au moins une feuille de verre (I) lors du bombage et s'étend au-delà de la bordure latérale de la feuille de verre (I).

12. Procédé selon l'une des revendications 9 à 11, dans lequel la surpression est de 5 mbar à 50 mbar, de préférence de 10 mbar à 30 mbar.

13. Procédé selon l'une des revendications 9 à 12, dans lequel la surpression est générée pendant une période de temps d'au plus 60 secondes sur la surface (O) de la feuille de verre (I).

14. Procédé selon l'une des revendications 9 à 13, dans lequel la feuille de verre (I) contient un verre sodocalcique et la température maximale à laquelle la feuille de verre (I) est chauffée est inférieure à 630°C, de préférence inférieure à 620°C.

15. Utilisation d'un outil de formage supérieur (3), qui présente un capot (8), lequel forme un espace creux ouvert en direction de la forme de bombage par gravité (1), et est doté d'une lèvre d'étanchéité (7) disposée sur une section de bordure (4) du capot (8), pour contribuer à un procédé de bombage par gravité, où, avec l'outil de formage (3), une surpression est générée sur la surface (O) d'une feuille de verre à bomber (I) opposée à une forme de bombage par gravité (1) en ce que la lèvre d'étanchéité (7) est amenée en contact avec la surface (O) de la feuille de verre (I) et un gaz est introduit dans l'espace creux (5).
